Europäisches Patentamt

European Patent Office

Office européen des brevets

(11) Numéro de publication: **0 298 174 B1**

# FASCICULE DE BREVET EUROPEEN

(45) Date de publication de fascicule du brevet: **23.12.92** (51) Int. Cl.5: **C09D 133/00**, C08L 33/16

(21) Numéro de dépôt: **87401309.7**

(22) Date de dépôt: **11.06.87**

(54) **Vernis de protection.**

(43) Date de publication de la demande:
**11.01.89 Bulletin 89/02**

(45) Mention de la délivrance du brevet:
**23.12.92 Bulletin 92/52**

(84) Etats contractants désignés:
**AT BE CH DE ES FR GB GR IT LI LU NL SE**

(56) Documents cités:
**EP-A- 0 037 094**
**DE-A- 1 952 585**

(73) Titulaire: **ELF ATOCHEM S.A.**
**4 & 8, Cours Michelet La Défense 10**
**F-92800 Puteaux(FR)**

(72) Inventeur: **Barbier, Yves**
**911, rue Basse**
**F-60700 Pontpoint(FR)**
Inventeur: **Perrin, Christian**
**4, rue de l'Aviation**
**F-78500 Sartrouville(FR)**

(74) Mandataire: **Rochet, Michel**
**ELF ATOCHEM S.A. Département Propriété**
**Industrielle 4-8, Cours Michelet La Défense**
**10 - Cedex 42**
**F-92091 Paris-La-Défense(FR)**

## Description

La présente invention concerne un nouveau vernis de protection capable de résister aux acides concentrés et possédant une bonne tenue mécanique.

De nombreux matériaux comme les thermodurcissables tels que les polyesters ou les thermoplastiques tels que le polystyrène ou les poly(méth)acrylates sont aisément attaqués par les acides concentrés comme l'acide sulfurique. Ce problème est particulièrement préoccupant dans le domaine de l'aéronautique. En effet, dans la haute atmosphère vers 10 000 mètres, les avions de ligne sont amenés à traverser fréquemment des nuages composés de 75 % environ d'acide sulfurique dont l'origine est vraisemblablement volcanique. Les surfaces transparentes de ces avions, qui sont souvent en polyméthacrylate de méthyle, s'altèrent rapidement, ce qui oblige à les repolir fréquemment, ou même à les changer après quelques voyages.

Pour résoudre ces problèmes, la demanderesse a mis au point un vernis de protection qui est, après polymérisation, insensible aux solvants organiques, notamment aux alcools, insensible aux acides concentrés, dont l'acide sulfurique, et capable d'adhérer parfaitement sur les matériaux thermodurcissables ou thermoplastiques. Un autre objectif de la présente invention réside dans un vernis de protection formable avec le matériau qu'il recouvre, sous l'action de la température et/ou mécaniquement, et qui donc ne se fissure pas sous l'action des sollicitations auxquelles ces surfaces sont soumises.

Plus précisément, la présente invention a pour objet un vernis de protection caractérisé en ce qu'il comprend en solution dans au moins un solvant halogéné et/ou au moins un solvant cétonique, exprimé en % en poids par rapport à la quantité totale de polymères :
- a 95 à 99,9 % d'un polymère (A) possédant un poids moléculaire moyen compris entre 15 000 et 800 000,
- 0,1 à 5 % d'un polymère (B) possédant un poids moléculaire moyen en poids compris entre 500 et 4 000, lesdits polymères (A) et (B) étant obtenus par polymérisation,
- de 50 à 100 % en poids d'au moins un monomère fluoré de formule :

$$H_2C = C(R_1) - C(O) - O - C(R_2)(R_3) - C_nF_{2n+1-m}H_m \qquad (I)$$

où :
. $R_1$ est un radical méthyle, un atome d'hydrogène, un atome de chlore ou un atome de fluor,
. $R_2$ et $R_3$, identiques ou différents, sont choisis parmi H, $CH_3$, $CH_2$-$CH_3$ ou $CF_3$,
. n est compris entre 1 et 20,
. m est compris entre 0 et 2n,
- et de 0 à 50% en poids d'au moins un monomère vinylique (II) ne comportant pas de groupes azido.

De manière surprenante, les éprouvettes recouvertes du vernis selon l'invention ne présentent aucune fissure lorsqu'elles sont soumises à un test de flexion en présence d'alcool ou d'acide. Ainsi, lors des mesures de seuil de CRAZING, dans les conditions indiquées à la norme AIR 9106 A (se reporter à l'exemple 1), on atteint avec ces éprouvettes un seuil de crazing de l'ordre de 1,9 kg/mm² en présence d'isopropanol et le seuil de crazing maximal de 2,8 kg/mm² en présence d'acide sulfurique à 75 % en poids.

De préférence, le vernis de protection selon l'invention comprend de 50 à 90% en poids de solvant halogéné et/ou de solvant cétonique.

De préférence encore, le poids moléculaire moyen en poids du polymère (A) est compris entre 50 000 et 300 000 et le poids moléculaire moyen en poids du polymère (B) est compris entre 500 et 2 000.

De préférence encore, les monomères fluorés de formule (I) sont choisis parmi l'acrylate de 2,2,2-trifluoroéthyle, le méthacrylate de 2,2,2-trifluoroéthyle.

Parmi les monomères vinyliques (II) utilisables dans la préparation des polymères (A) et (B), on peut citer les monomères (méth)acryliques tels que l'acide méthacrylique, les (méth)acrylates tels que l'acrylate d'éthyle, l'acrylate de butyle, l'acrylate de 2-éthylhexyle, le méthacrylate de méthyle, le méthacrylate de glycidyle, ou encore des (méth)acrylates chlorés comme le méthacrylate de 2-chloroéthyle, le méthacrylate de 2,2,2-trichloroéthyle.

Les solvants halogénés utilisables dans la présente invention sont notamment les solvants chlorés comme le dichlorométhane, le chloroforme, le dichloro-1,2-éthane, le dichloro-1,1-éthane ou une combinaison de ces solvants. De préférence, toutefois, on utilise le dichlorométhane, seul ou en combinaison avec un autre solvant chloré et/ou un solvant cétonique avec lequel on obtient des vernis parfaitement adhérents, sur les surfaces en matériau thermoplastique ou thermodurcissable.

Par solvant cétonique au sens de la présente invention on entend les organiques qui comprennent au

2

moins une fonction cétone - C(O) - . Parmi les solvants cétoniques utilisables dans la présente invention, on peut citer par exemple, l'acétone, la méthyléthylcétone, la méthylisobutylcétone, l'isophorone. Les solvants cétoniques peuvent être utilisés seul, en combinaison avec d'autres solvants cétoniques ou encore en combinaison avec un ou plusieurs solvants halogénés.

Les solvants halogénés et/ou cétoniques sont utilisés à raison de 50 à 95% en poids dans le vernis et de préférence de 70 à 85%.

Eventuellement, afin de diluer le vernis selon l'invention, on peut ajouter dans le vernis un solvant polaire tel que les acétates, par exemple l'acétate d'éthyle, l'acétate de butyle. On peut également diluer le vernis selon l'invention à l'aide de solvant tel que le toluène, le xylène à raison de 10% en poids au plus dans le vernis.

La présente invention a également pour objet un procédé de préparation de ce vernis selon lequel on effectue une polymérisation en solution, à une température comprise entre 20 et 70°C, et de préférence entre 40 et 60°C, en présence d'au moins un catalyseur, de monomères constitués de 50 à 100% en poids d'au moins un monomère fluoré de formule (I) tel que défini précédemment et de 0 à 50% en poids d'au moins un monomère (II), choisi, par exemple, parmi les monomères (II) cités précédemment.

Conformément à un mode de réalisation préféré du procédé selon l'invention, la polymérisation est effectuée dans au moins un solvant halogéné pouvant être un solvant chloré tel que le dichlorométhane, le dichloro-1,2-éthane, le dichloro-1,1-éthane, ou une combinaison de ces solvants. La polymérisation peut également être effectuée dans un solvant halogéné combiné à un solvant cétonique tel que l'acétone, la méthyléthylcétone, la méthylisobutylcétone ou l'isophorone. Eventuellement, on ajoute également un diluant polaire, par exemple un acétate tel que l'acétate d'éthyle ou l'acétate de butyle et/ou un diluant de faible polarité tel que le toluène ou le xylène, ou encore un mélange de deux ou plusieurs de ces diluants.

Parmi les catalyseurs de polymérisation convenant à la présente invention, on peut citer les peroxydes tels que le peroxyde de benzoyle, le peroxyde de lauroyle, le perdécanoate de tertiobutyle, le perbenzoate de tertiobutyle, le peroxyde d'acétylcyclohexane sulfonyle, le peroxyde de méthyléthylcétone, le peroxyde tertiobutyle, les peroxydicarbonates tels que le peroxydicarbonate de bis(tertiobutyl-4-cyclohexyle), le peroxydicarbonate de n-butyle, le peroxydicarbonate de cyclohexyle, le peroxydicarbonate de bis-éthyle-2-héxyle), le peroxydicarbonate d'isopropyle. On peut également utiliser des composés azo tels que l'azo-2,2'-bisisobutyronitrile, l'acide azo-4,4'-bis(cyano-4-pentanoïque). Les quantités de catalyseur à mettre en oeuvre dans le procédé selon l'invention varient de 0,1 à 2% en poids par rapport aux monomères à polymériser, et sont de préférence compris entre 0,1 et 1%.

Un autre procédé de préparation du vernis selon l'invention consiste à mélanger dans au moins un solvant halogéné et/ou au moins un solvant cétonique un ou plusieurs polymère (A) défini ci-dessus avec un ou plusieurs polymères (B) défini ci-dessus, ce dernier étant obtenu par polymérisation radicalaire d'au moins un monomère fluoré (I) avec au moins un monomère vinylique (II) dans les proportions définies ci-dessus et en présence d'un agent limiteur de chaînes, par exemple un mercaptan.

Le vernis selon l'invention possède une excellente adhérence sur divers matériaux thermoplastiques ou thermodurcissables, par exemple le polyméthacrylate de méthyle, les ABS, le polystyrène.

Le vernis selon l'invention possède un extrait sec de 5 à 50% en poids, et de préférence de 15 à 30% en poids.

On reconnait au vernis selon l'invention d'excellentes qualités de souplesse et de tenue mécanique, en particulier dans les essais de flexion.

Eventuellement, on peut ajouter dans le vernis selon l'invention des adjuvants par exemple des agents plastifiants tels que des phtalates comme le dibutyle phtalate ou le diéthyle phtalate.

Le vernis selon l'invention peut être appliqué par des moyens traditionnels, par exemple au pistolet, par trempage, ou à l'aide d'une machine à rideau, sur des plaques planes avant leur thermoformage ou encore sur des plaques thermoformées.

Les exemples donnés ci-dessous à titre indicatif permettront de mieux comprendre l'invention.

## EXEMPLE 1

Dans un réacteur équipé d'un réfrigérant, d'une agitation mécanique, d'un dispositif de barbotage d'azote et d'un dispositif de contrôle de température, on introduit la charge suivante (en parties en poids) :

| | |
|---|---|
| - dichlorométhane | 150 |
| - méthacrylate de 2,2,2-trifluoéthyle | 100 |
| - acide méthacrylique | 2 |
| - méthacrylate de méthyle | 1 |
| - peroxydicarbonate de bis(tertiobutyle-4-cyclohexyle) | 0,6 |

Le milieu réactionnel est ensuite mis sous agitation pendant 12 heures, la température étant maintenue à 40°C. Le mélange réactionnel est ensuite refroidi à la température ambiante. Le taux de polymérisation est alors de 85%. Cette valeur passe à 98% après 8 jours. Le vernis ainsi obtenu contient 96,6% en poids de polymère (A) de poids moléculaire moyen en poids égal à 145 000 et 3,4% en poids de polymère (B) de poids moléculaire moyen en poids égal à 700.

On dépose une couche de vernis de 0,3 mm d'épaisseur sur des éprouvettes en polyméthacrylate de méthyle de 25,5 mm de large, de 2,9 mm d'épaisseur et de 180 mm de longueur.

Quand les éprouvettes sont soumises à l'action de l'acide sulfurique à 75% en poids, le film de vernis ainsi réalisé ne présente aucun signe de détérioration.

Lors des mesures de seuil de CRAZING, conformément à la norme AIR 9106 A comprise dans le cahier des charges de l'Aviation, la longueur de CRAZING testée étant de 100 mm et la force appliquée à l'éprouvette vernie étant de 0,79 kgf, on obtient :

. un seuil de crazing égal à 1,9 kg/mm$^2$ pour l'isopropanol

. un seuil de crazing égal à 2,8 kg/mm$^2$ pour l'acide sulfurique à 75% en poids.

## EXEMPLE 2

Dans un appareillage identique à celui utilisé dans l'exemple 1, on prépare un vernis par polymérisation de 100 parties d'un mélange de monomères constitué de (en parties en poids) :

| | |
|---|---|
| - méthacrylate de 2,2,2-trifluoéthyle | 75, |
| - acrylate de 2,2,2-trifluoroéthyle | 25, |
| - acide méthacrylique | 2, |
| - méthacrylate de méthyle | 1, |

en présence de 0,5 partie de peroxydicarbonate de bis(tertiobutyle-4-cyclohexyle, de 150 parties de dichlorométhane et de 150 parties de méthyléthylcétone.

La réaction de polymérisation est effectuée à 50°C pendant 12 heures. Le mélange réactionnel est ensuite refroidi à température ambiante et laissé au repos pendant 8 jours.

Le vernis ainsi obtenu contient 98,8 % en poids de polymère (A) de poids moléculaire moyen en poids égal à 115 000 et 1,2 % en poids de polymère (B) de poids moléculaire moyen en poids égal à 1 200.

Le vernis ainsi obtenu donne des films qui adhérent bien sur les matériaux thermodurcissables et thermoplastiques et qui ne se détériorent pas sous l'action de l'acide sulfurique à 75% en poids.

Les résultats des tests de crazing effectués dans les conditions décrites dans l'exemple 1 sont les suivants :

. un seuil de crazing égal à 2,8 kg/mm$^2$ pour l'acide sulfurique à 75% en poids.

## EXEMPLE 3

Dans un appareillage identique à celui utilisé dans l'exemple 1, on prépare un vernis par polymérisation en solution de 100 parties d'un mélange de monomères constitué de (en parties en poids) :

| | |
|---|---|
| - méthacrylate de 2,2,2-trifluoroéthyle | 100, |
| - méthacrylate de méthyle | 1, |
| - acide méthacrylique | 2, |

en présence de 0,3 partie de peroxydicarbonate de bis(tertiobutyle-4-cyclohexyle), de 0,3 partie d'azo-2,2′-bisisobutyronitrile, de 150 parties de dichloro-1,2-éthane et de 150 parties de méthyléthylcétone.

La réaction de polymérisation est effectuée à 60°C pendant 12 heures. Ensuite, le mélange est refroidi à température ambiante et stocké pendant 8 jours.

Le vernis ainsi obtenu contient 97,5 % en poids de polymère (A) de poids moléculaire moyen en poids égal à 50 000 et 2,5 % en poids de polymère (B) de poids moléculaire moyen en poids égal à 900.

Le vernis ainsi obtenu donne des films qui adhérent bien sur les matériaux thermodurcissables et thermoplastiques et qui ne se détériorent pas sous l'action de l'acide sulfurique à 75% en poids.

Les résultats des test de crazing effectués dans les conditions décrites dans l'exemple 1 sont les suivants :

. un seuil de crazing égal à 1,82 kg/mm$^2$ pour l'isopropanol

. un seuil de crazing égal à 2,8 kg/mm$^2$ pour l'acide sulfurique à 75% en poids.

## EXEMPLE 4

Dans un appareillage identique à celui utilisé dans l'exemple 1, on prépare un vernis par polymérisation en solution de 100 parties d'un mélange de monomères constitué de (en parties en poids) :

| | |
|---|---|
| - méthacrylate de méthyle | 25, |
| - méthacrylate de 2,2,2-trifluoroéthyle | 75, |
| - acide méthacrylique | 2, |
| - peroxyde d'acétylcyclohexane sulfonyle à 28% dans le phtalate | 0,2, |
| - peroxydicarbonate de bis(tertiobutyle-4-cyclohexyle) | 0,2, |

en présence de 150 parties de dichlorométhane et 150 parties de dichloro-1,2-éthane. La polymérisation est effectuée à 52°C pendant 12 heures, et suivie d'un stockage du produit obtenu de 8 jours à température ambiante.

Le vernis obtenu contient par rapport au poids total des polymères 97,1 % en poids de polymère (A) de poids moléculaire moyen en poids égal à 65 000 et 2,9 % en poids de polymère (B) de poids moléculaire moyen en poids égal à 1 000.

Le vernis ainsi obtenu donne des films qui adhérent bien sur les matériaux thermodurcissables et thermoplastiques et qui ne se détériorent pas sous l'action de l'acide sulfurique à 75% en poids.

Les résultats des tests de crazing effectués dans les conditions décrites dans l'exemple 1 sont les suivants :

. un seuil de crazing égal à 2,8 kg/mm$^2$ pour l'acide sulfurique à 75% en poids.

## EXEMPLE 5 (comparatif)

Dans un appareillage identique à celui décrit dans l'exemple 1, on introduit la charge suivante (en parties en poids) :

| | |
|---|---|
| - méthacrylate de 2,2,2-trifluoroéthyle | 100 |
| - méthacrylate de méthyle | 1 |
| - acide méthacrylique | 2 |
| -peroxydicarbonate de bis(tertiobutyle-4-cyclohexyle) | 0,6 |
| - acétate d'éthyle | 150. |

Après chromatographie par perméation de gel, le digramme obtenu présente un pic gaussien unique correspondant à un polymère (A) de poids moléculaire moyen en poids égal à 47 000.

La réaction de polymérisation est effectuée à 80°C.

Le vernis ainsi obtenu déposé sur du polyméthacrylate de méthyle présente un net fendillement lors des essais flexion, même en l'absence d'acide sulfurique ou d'isopropanol.

## EXEMPLE 6 (comparitif)

Cet exemple est en tout point identique à l'exemple 5, excepté la nature du solvant qui est dans cet exemple du dichloro-1,2-éthane et la température de polymérisation qui est de 83,5°C.

Le vernis ainsi obtenu déposé sur du polyméthacrylate de méthyle présente un net fendillement lors des essais flexion, même en l'absence d'acide sulfurique ou d'isopropanol.

Après chromatographie par perméation, le diagramme obtenu présente un pic unique correspondant à un polymère (A) de poids moléculaire moyen en poids égal à 85 000.

**Revendications**

**Revendications pour les Etats contractants suivants : BE, CH, DE, FR, GB, IT, LI, LU, NL, SE**

1. Vernis de protection caractérisé en ce qu'il comprend en solution dans au moins un solvant halogéné et/ou au moins un solvant cétonique, exprimé en pourcentage en poids par rapport à la quantité totale de polymères :
   - 95 à 99,99% d'un polymère (A) possédant un poids moléculaire moyen compris entre 15 000 et 800 000,
   - 0,1 à 5% d'un polymère (B) possédant un poids moléculaire moyen en poids compris entre 500 et 4 000, lesdits polymères (A) et (B) étant obtenus par polymérisation,
   - de 50 à 100% en poids d'au moins un monomère fluoré de formule :

   $$H_2C = C(R_1) - C(O) - O - C(R_2)(R_3) - C_nF_{2n+1-m}H_m \qquad (I)$$

   où :
   - . $R_1$ est un radical méthyle, un atome d'hydrogène, un atome de chlore ou un atome de fluor,
   - . $R_2$ et $R_3$, identiques ou différents, sont choisis parmi H, $CH_3$, $CH_2 - CH_3$ ou $CF_3$,
   - . n est compris entre 1 et 20,
   - . m est compris entre 0 et 2n,
   - et de 0 à 50% en poids d'au moins un monomère vinylique (II) ne comportant pas de groupes azido.

2. Vernis selon la revendication 1, caractérisé en ce qu'il comprend de 50 à 90% en poids de solvant halogéné et/ou solvant cétonique.

3. Vernis selon la revendication 1 ou 2, caractérisé en ce que le poids moléculaire moyen en poids du polymère (A) est compris entre 50 000 et 300 000.

4. Vernis selon l'une quelconque des revendications 1 à 3, caractérisé en ce que le poids moléculaire moyen en poids du polymère (B) est compris entre 500 et 2 000.

5. Vernis selon l'une quelconque des revendications 1 à 4, caractérisé en ce que le monomère fluoré de formule (I) est le méthacrylate de 2,2,2-trifluoroéthyle et/ou l'acrylate de 2,2,2-trifluoroéthyle.

6. Vernis selon l'une quelconque des revendications 1 à 5, caractérisé en ce que le monomère (II) est choisi parmi les monomères (méth)acryliques tels que l'acide méthacrylique, les (méth)acrylates tels que l'acrylate d'éthyle, l'acrylate de butyle, l'acrylate de 2-éthylhexyle, le méthacrylate de méthyle, le méthacrylate de glycidyle ou les méthacrylates chlorés tels que le méthacrylate de 2-chloroéthyle ou le méthacrylate de 2,2,2-trichloroéthyle.

7. Vernis selon l'une quelconque des revendications 1 à 6, caractérisé en ce que le solvant cétonique est choisi parmi l'acétone, la méthyléthylcétone, la méthylisobutylcétone, l'isophorone.

8. Vernis selon l'une quelconque des revendications 1 à 7, caractérisé en ce que le solvant halogéné est choisi parmi le dichlorométhane, le chloroforme, le dichloro-1,2-éthane, le dichloro-1,1-éthane.

9. Procédé de préparation du vernis conforme à la revendication 1 caractérisé en ce que l'on effectue une polymérisation en solution, à une température comprise entre 20 et 70°C, en présence d'au moins un catalyseur de monomères constitués de :
   - de 50 à 100% en poids d'au moins un monomère fluoré de formule (I) :

   $$H_2C = C(R_1) - C(O) - O - C(R_2)(R_3) - C_nF_{2n+1-m}H_m$$

   où :
   - . $R_1$ est un radical méthyle, un atome d'hydrogène, un atome de chlore ou un atome de fluor,

. $R_2$ et $R_3$, identiques ou différents, sont choisis parmi H, $CH_3$, $CH_2 - CH_3$ ou $CF_3$,
. n est compris entre 1 et 20,
. m est compris entre 0 et 2n,
- et de 0 à 50% en poids d'au moins un monomère (II) ne comportant pas de groupes azido.

10. Procédé selon la revendication 9, caractérisé en ce que la polymèrisation est effectuée à une température comprise entre 40 et 60°C.

11. Procédé selon la revendication 9 ou 10, caractérisé en ce que la polymérisation est effectuée dans un solvant halogéné choisi parmi le dichlorométhane, le chloroforme, le dichloro-1,2-éthane, le dichloro-1,1-éthane.

**Revendications pour les Etats contractants suivants : AT, ES**

1. Procédé de préparation d'un vernis de protection caractérisé en ce que l'on effectue une polymérisation en solution dans un solvant halogéné et/ou au moins un solvant cétonique, à une température comprise entre 20 et 70°C, en présence d'au moins un catalyseur, de monomères constitués de :
- de 50 à 100% en poids d'au moins un monomère fluoré de formule (I) :

$$H_2C = C(R_1) - C(O) - O - C(R_2)(R_3) - C_nF_{2n+1-m}H_m$$

où :
. $R_1$ est un radical méthyle, un atome d'hydrogène, un atome de chlore ou un atome de fluor,
. $R_2$ et $R_3$, identiques ou différents, sont choisis parmi H, $CH_3$, $CH_2 - CH_3$ ou $CF_3$,
. n est compris entre 1 et 20,
. m est compris entre 0 et 2n,
- et de 0 à 50% en poids d'au moins un monomère (II) ne comportant pas de groupes azido.

2. Procédé selon la revendication 1, caractérisé en ce que la polymèrisation est effectuée à une température comprise entre 40 et 60°C.

3. Procédé selon la revendication 1 ou 2, caractérisé en ce que le solvant halogéné est choisi parmi le dichlorométhane, le chloroforme, le dichloro-1,2-éthane, le dichloro-1,1-éthane.

4. Procédé selon l'une quelconque des revendications 1 à 3, caractérisé en ce que le solvant cétonique est choisi parmi l'acétone, la méthyléthylcétone, la méthylisobutylcétone, l'isophorone.

5. Procédé selon l'une des revendications 1 à 4, caractérisé en ce qu'il conduit à un vernis de protection comprenant, en solution dans au moins un solvant halogéné et/ou au moins un solvant cétonique, exprimé en pourcentage en poids par rapport à la quantité totale de polymères :
- 95 à 99,9% d'un polymère (A) possédant un poids moléculaire moyen compris entre 15 000 et 800 000,
- 0,1 à 5% d'un polymère (B) possédant un poids moléculaire moyen en poids compris entre 500 et 4 000, lesdits polymères (A) et (B) étant obtenus par polymérisation,
- de 50 à 100% en poids d'au moins un monomère fluoré de formule :

$$H_2C = C(R_1) - C(O) - O - C(R_2)(R_3) - C_nF_{2n+1-m}H_m \qquad (I)$$

où :
. $R_1$ est un radical méthyle, un atome d'hydrogène, un atome de chlore ou un atome de fluor,
. $R_2$ et $R_3$, identiques ou différents, sont choisis parmi H, $CH_3$, $CH_2 - CH_3$ ou $CF_3$,
. n est compris entre 1 et 20,
. m est compris entre 0 et 2n,
- et de 0 à 50% en poids d'au moins un monomère vinylique (II) ne comportant pas de groupes azido.

6. Procédé selon la revendication 5, caractérisé en ce qu'il comprend de 50 à 90% en poids de solvant halogéné et/ou solvant cétonique.

**7.** Procédé selon l'une des revendications 5 ou 6, caractérisé en ce que le poids moléculaire moyen en poids du polymère (A) est compris entre 50 000 et 300 000.

**8.** Procédé selon l'une quelconque des revendications 5 à 7, caractérisé en ce que le poids moléculaire moyen en poids du polymère (B) est compris entre 500 et 2 000.

**9.** Procédé selon l'une quelconque des revendications 1 à 8, caractérisé en ce que le monomère fluoré de formule (I) est le méthacrylate de 2,2,2-trifluoroéthyle et/ou l'acrylate de 2,2,2-trifluoroéthyle.

**10.** Procédé selon l'une quelconque des revendications 1 à 9, caractérisé en ce que le monomère (II) est choisi parmi les monomères (méth)acryliques tels que l'acide méthacrylique, les (méth)acrylates tels que l'acrylate d'éthyle, l'acrylate de butyle, l'acrylate de 2-éthylhexyle, le méthacrylate de méthyle, le méthacrylate de glycidyle ou les méthacrylates chlorés tels que le méthacrylate de 2-chloroéthyle ou le méthacrylate de 2,2,2-trichloroéthyle.

**Claims**
**Claims for the following Contracting States : BE, CH, DE, FR, GB, IT, LI, LU, NL, SE**

**1.** Protective varnish characterised in that it comprises, in solution in at least one halogenated solvent and/or at least one ketonic solvent, expressed as percentage by weight relative to the total quantity of polymers:
- 95 to 99.9 % of a polymer (A) which has an average molecular weight of between 15,000 and 800,000,
- 0.1 to 5 % of a polymer (B) which has a weight-average molecular weight of between 500 and 4,000, the said polymers (A) and (B) being obtained by polymerisation
- of from 50 to 100 % by weight of at least one fluorinated monomer of formula:

$$H_2C = C(R_1)-C(O)-O-C(R_2)(R_3)-C_nF_{2n+1-m}H_m \qquad (I)$$

where:
- $R_1$ is a methyl radical, a hydrogen atom, a chlorine atom or a fluorine atom,
- $R_2$ and $R_3$, which are identical or different, are chosen from H, $CH_3$, $CH_2$-$CH_3$ and $CF_3$,
- n is between 1 and 20,
- m is between 0 and 2n,
- and of from 0 to 50 % by weight of at least one vinyl monomer (II) not containing any azido groups.

**2.** Varnish according to Claim 1, characterised in that it comprises from 50 to 90 % by weight of halogenated solvent and/or ketonic solvent.

**3.** Varnish according to Claim 1 or 2, characterised in that the weight-average molecular weight of the polymer (A) is between 50,000 and 300,000.

**4.** Varnish according to any one of Claims 1 to 3, characterised in that the weight-average molecular weight of the polymer (B) is between 500 and 2,000.

**5.** Varnish according to any one of Claims 1 to 4, characterised in that the fluorinated monomer of formula (I) is 2,2,2-trifluoroethyl methacrylate and/or 2,2,2-trifluoroethyl acrylate.

**6.** Varnish according to any one of Claims 1 to 5, characterised in that the monomer (II) is chosen from (meth)acrylic monomers such as methacrylic acid, (meth)acrylates such as ethyl acrylate, butyl acrylate, 2-ethylhexyl acrylate, methyl methacrylate or glycidyl methacrylate, and chlorinated methacrylates such as 2-chloroethyl methacrylate or 2,2,2-trichloroethyl methacrylate.

**7.** Varnish according to any one of Claims 1 to 6, characterised in that the ketonic solvent is chosen from acetone, methyl ethyl ketone, methyl isobutyl ketone and isophorone.

**8.** Varnish according to any one of Claims 1 to 7, characterised in that the halogenated solvent is chosen from dichloromethane, chloroform, 1,2-dichloroethane and 1,1-dichloroethane.

9. Process for the preparation of the varnish in accordance with Claim 1, characterised in that a polymerisation in solution is performed at a temperature of between 20 and 70°C, in the presence of at least one catalyst, of monomers consisting of:
   - from 50 to 100 % by weight of at least one fluorinated monomer of formula (I):

$$H_2C = C(R_1)\text{-}C(O)\text{-}O\text{-}C(R_2)(R_3)\text{-}C_nF_{2n+1-m}H_m$$

   where:
   - $R_1$ is a methyl radical, a hydrogen atom, a chlorine atom or a fluorine atom,
   - $R_2$ and $R_3$, which are identical or different, are chosen from H, $CH_3$, $CH_2\text{-}CH_3$ and $CF_3$,
   - n is between 1 and 20,
   - m is between 0 and 2n,
   - and from 0 to 50 % by weight of at least one monomer (II) not containing any azido groups.

10. Process according to Claim 9, characterised in that the polymerisation is performed at a temperature of between 40 and 60°C.

11. Process according to Claim 9 or 10, characterised in that the polymerisation is performed in a halogenated solvent chosen from dichloromethane, chloroform, 1,2-dichloroethane and 1,1-dichloroethane.

**Claims for the following Contracting States : AT, ES**

1. Process for the preparation of a protective varnish, characterised in that a polymerisation in solution is performed in a halogenated solvent and/or at least one ketonic solvent at a temperature of between 20 and 70°C, in the presence of at least one catalyst, of monomers consisting of:
   - from 50 to 100 % by weight of at least one fluorinated monomer of formula (I):

$$H_2C = C(R_1)\text{-}C(O)\text{-}O\text{-}C(R_2)(R_3)\text{-}C_nF_{2n+1-m}H_m$$

   where:
   - $R_1$ is a methyl radical, a hydrogen atom, a chlorine atom or a fluorine atom,
   - $R_2$ and $R_3$, which are identical or different, are chosen from H, $CH_3$, $CH_2\text{-}CH_3$ and $CF_3$,
   - n is between 1 and 20,
   - m is between 0 and 2n,
   - and from 0 to 50 % by weight of at least one monomer (II) not containing any azido groups.

2. Process according to Claim 1, characterised in that the polymerisation is performed at a temperature of between 40 and 60°C.

3. Process according to Claim 1 or 2, characterised in that the halogenated solvent is chosen from dichloromethane, chloroform, 1,2-dichloroethane and 1,1-dichloroethane.

4. Process according to any one of Claims 1 to 3, characterised in that the ketonic solvent is chosen from acetone, methyl ethyl ketone, methyl isobutyl ketone and isophorone.

5. Process according to one of Claims 1 to 4, characterised in that it results in a protective varnish comprising, in solution in at least one halogenated solvent and/or at least one ketonic solvent, expressed as percentage by weight relative to the total quantity of polymers:
   - 95 to 99.9 % of a polymer (A) which has an average molecular weight of between 15,000 and 800,000,
   - 0.1 to 5 % of a polymer (B) which has a weight-average molecular weight of between 500 and 4,000, the said polymers (A) and (B) being obtained by polymerisation
   - of from 50 to 100 % by weight of at least one fluorinated monomer of formula:

$$H_2C = C(R_1)\text{-}C(O)\text{-}O\text{-}C(R_2)(R_3)\text{-}C_nF_{2n+1-m}H_m \qquad (I)$$

EP 0 298 174 B1

where:
- $R_1$ is a methyl radical, a hydrogen atom, a chlorine atom or a fluorine atom,
- $R_2$ and $R_3$, which are identical or different, are chosen from H, $CH_3$, $CH_2$-$CH_3$ and $CF_3$,
- n is between 1 and 20,
- m is between 0 and 2n,
- and of from 0 to 50 % by weight of at least one vinyl monomer (II) not containing any azido groups.

6. Process according to Claim 5, characterised in that it comprises from 50 to 90 % by weight of halogenated solvent and/or ketonic solvent.

7. Process according to one of Claims 5 and 6, characterised in that the weight-average molecular weight of the polymer (A) is between 50,000 and 300,000.

8. Process according to any one of Claims 5 to 7, characterised in that the weight-average molecular weight of the polymer (B) is between 500 and 2,000.

9. Process according to any one of Claims 1 to 8, characterised in that the fluorinated monomer of formula (I) is 2,2,2-trifluoroethyl methacrylate and/or 2,2,2-trifluoroethyl acrylate.

10. Process according to any one of Claims 1 to 9, characterised in that the monomer (II) is chosen from (meth)acrylic monomers such as methacrylic acid, (meth)acrylates such as ethyl acrylate, butyl acrylate, 2-ethylhexyl acrylate, methyl methacrylate or glycidyl methacrylate, and chlorinated methacrylates such as 2-chloroethyl methacrylate or 2,2,2-trichloroethyl methacrylate.

**Patentansprüche**
**Patentansprüche für folgende Vertragsstaaten : BE, CH, DE, FR, GB, IT, LI, LU, NL, SE**

1. Schutzlack, dadurch gekennzeichnet, daß er als Lösung in wenigstens einem halogenierten Lösungsmittel und/oder wenigstens einem ketonischen Lösungsmittel in Gewichtsprozent, bezogen auf die Gesamtmenge der Polymeren, enthält:
   - 95 bis 99,9 % eines Polymeren (A), das ein mittleres Molekulargewicht zwischen 15.000 und 800.000 besitzt,
   - 0,1 bis 5 % eines Polymeren (B), das ein mittleres Molekulargewicht zwischen 500 und 4.000 besitzt, wobei die Polymeren (A) und (B) durch Polymerisation erhalten wurden,
   - 50 bis 100 Gew.% wenigstens eines fluorierten Monomeren der Formel:

   $$H_2C = C(R_1)-C(O)-O-C(R_2)(R_3)-C_nF_{2n+1-m}H_m \qquad (I)$$

   in der
   . $R_1$ ein Methylrest, ein Wasserstoffatom, ein Chloratom oder ein Fluoratom ist,
   . $R_2$ und $R_3$ gleich oder verschieden unter H, $CH_3$, $CH_2$-$CH_3$ oder $CF_3$ ausgewählt sind,
   . n 1 bis 20 bedeutet,
   . m zwischen 0 und 2n liegt,
   - und 0 bis 50 Gew.% wenigstens eines Vinylmonomeren (II), das keine Azidogruppen enthält.

2. Lack nach Anspruch 1, dadurch gekennzeichnet, daß er 50 bis 90 Gew.% des halogenierten und/oder ketonischen Lösungsmittels enthält.

3. Lack nach Anspruch 1 oder 2, dadurch gekennzeichnet, daß das mittlere Molekulargewicht des Polymeren (A) zwischen 50.000 und 300.000 liegt.

4. Lack nach irgendeinem der Ansprüche 1 bis 3, dadurch gekennzeichnet, daß das mittlere Molekulargewicht des Polymeren (B) zwischen 500 und 2.000 liegt.

5. Lack nach irgendeinem der Ansprüche 1 bis 4, dadurch gekennzeichnet, daß das fluorierte Monomere der Formel (I) 2,2,2-Trifluorethylmethacrylat und/oder 2,2,2-Trifluorethylacrylat ist.

10

6. Lack nach irgendeinem der Ansprüche 1 bis 5, dadurch gekennzeichnet, daß das Monomere (II) unter den (Meth)acrylmonomeren, wie Methacrylsäure, den (Meth)acrylaten, wie Ethylacrylat, Butylacrylat, 2-Ethylhexylacrylat, Methylmethacrylat, Glycidylmethacrylat oder den chlorierten Methacrylaten wie 2-Chlorethylmethacrylat oder 2,2,2-Trichlorethylmethacrylat ausgewählt ist.

7. Lack nach irgendeinem der Ansprüche 1 bis 6, dadurch gekennzeichnet, daß das ketonische Lösungsmittel unter Aceton, Methylethylketon, Methylisobutylketon und Isophoron ausgewählt ist.

8. Lack nach irgendeinem der Ansprüche 1 bis 7, dadurch gekennzeichnet, daß das halogenierte Lösungsmittel unter Dichlormethan, Chloroform, 1,2-Dichlorethan und 1,1-Dichlorethan ausgewählt ist.

9. Verfahren zur Herstellung des Lacks nach Anspruch 1, dadurch gekennzeichnet, daß man bei einer Temperatur zwischen 20 und 70°C in Gegenwart mindestens eines Katalysators eine Lösungspolymerisation der folgenden Monomeren durchführt:
   - 50 bis 100 Gew.% mindestens eines fluorierten Monomeren der Formel (I)

$$H_2C = C(R_1)\text{-}C(O)\text{-}O\text{-}C(R_2)(R_3)\text{-}C_nF_{2n+1\text{-}m}H_m$$

   in der:
   . $R_1$ ein Methylrest, ein Wasserstoffatom, ein Chloratom oder ein Bromatom ist,
   . $R_2$ und $R_3$ gleich oder verschieden unter H, $CH_3$, $CH_2$-$CH_3$ oder $CF_3$ ausgewählt sind.
   . n zwischen 1 und und 20 liegt,
   . m zwischen 0 und 2n liegt
   - 0 bis 50 Gew.%, wenigstens eines Monomeren (II), das keine Azidogruppen enthält.

10. Verfahren nach Anspruch 9, dadurch gekennzeichnet, daß die Polymerisation bei einer Temperatur zwischen 40 und 60°C durchgeführt wird.

11. Verfahren nach Anspruch 9 oder 10, dadurch gekennzeichnet, daß die Polymerisation in einem halogenierten Lösungsmittel ausgewählt unter Dichlormethan, Chloroform, 1,2-Dichlorethan und 1,1-Dichlorethan durchgeführt wird.

**Patentansprüche für folgende Vertragsstaaten : AT, ES**

1. Verfahren zur Herstellung eines Schutzlacks, dadurch gekennzeichnet, daß man bei einer Temperatur zwischen 20 und 70°C in Gegenwart wenigstens eines Katalysators in einem halogenierten und/oder wenigstens einem ketonischen Lösungsmittel eine Lösungspolymerisation der folgenden Monomeren durchführt:
   - 95 bis 99,9 % eines Polymeren (A), das ein mittleres Molekulargewicht zwischen 15.000 und 800.000 besitzt,
   - 0,1 bis 5 % eines Polymeren (B), das ein mittleres Molekulargewicht zwischen 500 und 4.000 besitzt, wobei die Polymeren (A) und (B) durch Polymerisation erhalten wurden,
   - 50 bis 100 Gew.% wenigstens eines fluorierten Monomeren der Formel:

$$H_2C = C(R_1)\text{-}C(O)\text{-}O\text{-}C(R_2)(R_3)\text{-}C_nF_{2n+1\text{-}m}H_m \qquad (I)$$

   in der
   . $R_1$ ein Methylrest, ein Wasserstoffatom, ein Chloratom oder ein Fluoratom ist,
   . $R_2$ und $R_3$ gleich oder verschieden unter H, $CH_3$, $CH_2$-$CH_3$ oder $CF_3$ ausgewählt sind,
   . n 1 bis 20 bedeutet,
   . m zwischen 0 und 2n liegt,
   - und 0 bis 50 Gew.% wenigstens eines Vinylmonomeren (II), das keine Azidogruppen enthält.

2. Verfahren nach Anspruch 1, dadurch gekennzeichnet, daß die Polymerisation bei einer Temperatur zwischen 40 und 60°C durchgeführt wird.

3. Verfahren nach Anspruch 1 oder 2, dadurch gekennzeichnet, daß das halogenierte Lösungsmittel unter Dichlormethan, Chloroform, 1,2-Dichlorethan, 1,1-Dichlorethan ausgewählt ist.

**4.** Verfahren nach irgendeinem der Ansprüche 1 bis 3, dadurch gekennzeichnet, daß das ketonische Lösungsmittel unter Aceton, Methylethylketon, Methylisobutylketon und Isophoron ausgewählt ist.

**5.** Verfahren nach einem der Ansprüche 1 bis 4, dadurch gekennzeichnet, daß es zu einem Schutzlack führt, der in Lösung in wenigstens einem halogenierten Lösungsmittel und/oder wenigstens einem ketonischen Lösungsmittel in Gewichtsprozent und bezogen auf die Gesamtmenge der Polymeren enthält:
- 95 bis 99,9 % eines Polymeren (A), das ein mittleres Molekulargewicht zwischen 15.000 und 800.000 besitzt,
- 0,1 bis 5 % eines Polymeren (B), das ein mittleres Molekulargewicht zwischen 500 und 4.000 besitzt, wobei die Polymeren (A) und (B) durch Polymerisation erhalten wurden,
- 50 bis 100 Gew.% wenigstens eines fluorierten Monomeren der Formel:

$$H_2C = C(R_1)-C(O)-O-C(R_2)(R_3)-C_nF_{2n+1-m}H_m \qquad (I)$$

in der
. $R_1$ ein Methylrest, ein Wasserstoffatom, ein Chloratom oder ein Fluoratom ist,
. $R_2$ und $R_3$ gleich oder verschieden unter H, $CH_3$, $CH_2$-$CH_3$ oder $CF_3$ ausgewählt sind,
. n 1 bis 20 bedeutet,
. m zwischen 0 und 2n liegt,
- und 0 bis 50 Gew.% wenigstens eines Vinylmonomeren (II), das keine Azidogruppen enthält.

**6.** Verfahren nach Anspruch 5, dadurch gekennzeichnet, daß der Schutzlack 50 bis 90 Gew.% des halogenierten und/oder ketonischen Lösungsmittels enthält.

**7.** Verfahren nach einem der Ansprüche 5 oder 6, dadurch gekennzeichnet, daß das mittlere Molekulargewicht des Polymeren (A) zwischen 50.000 und 300.000 liegt.

**8.** Verfahren nach irgendeinem der Ansprüche 5 bis 7, dadurch gekennzeichnet, daß das mittlere Molekulargewicht des Polymeren (B) zwischen 500 und 2.000 liegt.

**9.** Verfahren nach irgendeinem der Ansprüche 1 bis 8, dadurch gekennzeichnet, daß das fluorierte Monomere der Formel (I) 2,2,2-Trifluorethylmethacrylat und/oder 2,2,2-Trifluorethylacrylat ist.

**10.** Verfahren nach irgendeinem der Ansprüche 1 bis 9, dadurch gekennzeichnet, daß das Monomere (II) unter den (Meth)acrylmonomeren, wie Methacrylsäure, den (Meth)acrylaten, wie Ethylacrylat, Butylacrylat, 2-Ethylhexylacrylat, Methylmethacrylat, Glycidylmethacrylat oder den chlorierten Methacrylaten wie 2-Chlorethylmethacrylat oder 2,2,2-Trichlorethylmethacrylat ausgewählt ist.